# EUROPEAN PATENT SPECIFICATION

(11) **EP 4 180 471 B1**
(45) Date of publication and mention of the grant of the patent: **06.08.2025**
(21) Application number: 21837402.3
(22) Date of filing: 24.06.2021
(51) Int. Cl.: C08F 265/04, C09D 151/06, C09K 3/18

(54) **ORGANIC FINE PARTICLE**
ORGANISCHE FEINPARTIKEL
PARTICULE FINE ORGANIQUE

(30) Priority: 09.07.2020 JP 2020118765
(43) Date of publication of application: 17.05.2023
(73) Proprietor: Daikin Industries, Ltd., Osaka-shi, Osaka 530-8323 (JP); National University Corporation Kobe University, Kobe-shi, Hyogo 657-8501 (JP)
(72) Inventor: TANAKA, Yoshito, Osaka-shi, Osaka 530-8323 (JP); IIDA, Mayumi, Osaka-shi, Osaka 530-8323 (JP); SHIOTANI, Yuko, Osaka-shi, Osaka 530-8323 (JP); AIHARA, Marina, Osaka-shi, Osaka 530-8323 (JP); HIGASHI, Masahiro, Osaka-shi, Osaka 530-8323 (JP); MINAMI, Hideto, Kobe-shi, Hyogo 657-8501 (JP)
(74) Representative: Hoffmann Eitle
(86) International application number: PCT/JP2021/023992
(87) International publication number: WO 2022/009689

(56) References cited:
- WO-A1-2013/046851
- WO-A1-2017/159754
- JP-A- 2000 160 148
- JP-A- H 021 795
- JP-A- H07 278 442
- JP-A- H11 172 126
- US-A1- 2003 118 722
- PAN YUANFENG ET AL: "Hydrophobic modification of cellulose fibres by cationic-modified polyacrylate latex with core-shell structure", CELLULOSE, SPRINGER NETHERLANDS, NETHERLANDS, vol. 20, no. 1, 1 February 2013 (2013-02-01), pages 485 - 494, XP036207134, ISSN: 0969-0239, [retrieved on 20130201], DOI: 10.1007/S10570-012-9837-7

## Description

### Technical Field

The present disclosure relates to an organic fine particle, and more specifically to an organic fine particle with a core-shell structure.

### Background Art

Coating of fluororesin is known to provide water-repellency to the surface of a substrate. For example, it is known that coating of fluororesin allows the surface of a substrate to have water-repellency with a water contact angle of about 120°C. However, in recent years a non-fluorine water-repellent coating material having excellent water-repellency without using fluorine or with a reduced amount of fluorine has been needed to be developed from the viewpoint of environmental impact.

WO 2010/073623 discloses that water repellency can be given to a substrate by coating the substrate with a coating solution prepared by dispersing fine particles with a hydrophobic surface having an average primary particle size of ≤ 100 nm in an organic solvent including ≥ 65 mass% of a hydrophobic solvent based on all organic solvents. Inorganic particles are used as the fine particle in WO 2010/073623.

JP-A-1993-117344 discloses a core-shell emulsion in which the core is a hydrophobic polymer having a glass transition temperature (Tg) of ≥ 90°C and the shell is a copolymer of an α,β-monoethylenically unsaturated carboxylic acid, a polymerizable monomer having a polyoxyalkylene chain and another polymerizable monomer, which has a Tg of 0-70°C. A monomer of which homopolymer is water soluble is used in JP-A-1993-117344.

US-A-2003/118722 discloses a method of preparing fluorinated coating materials with core-shell structure by (1) synthesizing core latex by emulsion polymerization using an (meth)acrylate-based, styrene-based or vinyl-based monomer, a surfactant, water, a chain transfer agent and a water-soluble initiator; and (2) synthesizing a core-shell particle by adding fluorinated monomer alone or together with a comonomer to the shell when the conversion ratio of the monomer into a polymer in step (1) reaches 70-95%.

### Summary of Invention

### Technical Problem

However, at present coating using organic fine particles does not necessarily have sufficient water-repellency. An object of the present disclosure is to provide a novel water-repellent composition which can give excellent water repellency to substrates by using an organic fine particle having a core-shell structure with a specific compositional feature.

### Solution to Problem

The present invention provides a particle, which is an organic fine particle comprising
- a non-fluorine core polymer having a Tg or melting point, each determined by differential scanning calorimetry (DSC), of ≥ 15°C, and a water contact angle, determined by the method defined later herein, of ≥ 100°, wherein all monofunctional monomers constituting the core polymer are hydrophobic monomers a homopolymer of which has a water contact angle of ≥ 100°; and
- a shell polymer having a Tg or melting point lower than the Tg or melting point of the core polymer, and a water contact angle of < 100°, wherein all monofunctional monomers constituting the shell polymer are water-insoluble monomers a homopolymer of which is water-insoluble, the water-insoluble monomer having at least one C₁₋₁₀-hydrocarbyl or C₁-fluoroalkyl group.

Also, the present invention provides a surface coating structure, comprising the particle of the invention arranged on a surface of a substrate.

Further, the present invention provides a water-repellent composition which is a dispersion of an organic fine particle, and comprises the particle of the invention and a liquid medium.

Yet further, the present invention provides a method for forming a surface coating structure, comprising applying a treatment liquid comprising the water-repellent composition of the invention to a substrate.

Preferred embodiments of the invention are as defined in the appended dependent claims and/or in the following detailed description.

### Effect of Invention

According to the present disclosure, use of a specific organic fine particle allows unevenness to be formed on the surface of a substrate and excellent water-repellency can be given to the substrate.

### Brief Description of Drawings

[Figure 1] Figure 1(a) is an optical micrograph of PSA particles and Figure 1(b) is a scanning electron microscope (SEM) image of PSA particles in Examples.
[Figure 2] Figure 2(a) is an optical micrograph of PSA particles before seed polymerization and Figure 2(b) is an optical micrograph of PSA/PEHMA particles after seed polymerization in Examples.
[Figure 3] Figure 3(a) is a SEM image of cast PSA particles and Figure 3(b) is a SEM image of cast PSA/PEHMA particles in Examples.

### Description of Embodiments

### <Water-repellent composition>

The water-repellent composition comprises an organic fine particle and a liquid medium. The water-repellent composition may further comprise at least one selected from a liquid medium, a binder resin, a dispersant, a surfactant and other additives.

### [Organic fine particle]

The organic fine particle is an active ingredient that provides water-repellency.

The organic fine particles may have an average particle size of ≥ 10 nm, ≥ 50 nm, ≥ 100 nm, ≥ 300 nm, or ≥ 750 nm, and preferably ≥ 50 nm. The organic fine particles may have an average particle size of ≤ 5,000 nm, ≤ 4,000 nm, ≤ 3,000 nm, or ≤ 2,000 nm, and preferably ≤ 4,000 nm. The average particle size means a number average particle size measured in an image analysis.

The organic fine particle according to the present disclosure comprises a core polymer and a shell polymer to have a core-shell structure. The core polymer and the shell polymer may be chemically and/or physically bonded.

### (Core polymer)

The core polymer forms the core of the core-shell structure. The core polymer is formed of a non-fluorine polymer. The core polymer may be a random polymer.
The core polymer may have a Tg or a melting point of ≥ 15°C, ≥ 17.5°C, ≥ 20°C, ≥ 22.5°C, ≥ 25°C, ≥ 27.5°C, or ≥ 29.5°C, and preferably ≥ 17.5°C, or ≥ 22.5°C. The core polymer may have a Tg or a melting point of ≤ 150°C, ≤ 100°C, ≤ 75°C, ≤ 50°C, ≤ 45°C, or ≤ 40°C, and preferably ≤ 100°C. The melting point and Tg may be measured by a known method, for example differential scanning calorimetry (DSC).
The core polymer may have a water contact angle of ≥ 100°, ≥ 101°, ≥ 103°, ≥ 105°, ≥ 110°, ≥ 115°, or ≥ 120°. The core polymer may have a water contact angle of ≤ 160°, or ≤ 140°. It is preferable that the core polymer has a water contact angle in the above range from the viewpoint of the water-repellency of the organic fine particle. The water contact angle of polymer means a water contact angle of polymer on spin coated film as shown in Examples.

### · Hydrophobic core monomer

The core polymer has a repeating unit derived from a monofunctional monomer. The "monofunctional monomer" refers to a monomer having an ethylenically unsaturated double bond. The monofunctional monomers constituting the core polymer may be a hydrophobic core monomer of which homopolymer has a water contact angle of ≥ 100°. All the monofunctional monomers constituting the core polymer may be a hydrophobic core monomer. The homopolymer of the hydrophobic core monomer may have a water contact angle of ≥ 100°, ≥ 101°, ≥ 103°, ≥ 105°, ≥ 110°, ≥ 115°, or ≥ 120°, and preferably ≥ 100°. The homopolymer of the hydrophobic core monomer may have a water contact angle of ≤ 160°, ≤ 140°, ≤ 130°, ≤ 125°, or ≤ 110°. It is preferable that the homopolymer has a water contact angle in the above range from the viewpoint of the water-repellency of the organic fine particle.

It is preferable that the hydrophobic core monomer does not include a reactive/hydrophilic monomer having an ethylenically unsaturated double bond and at least one a reactive group and/or a hydrophilic group. Examples of reactive groups include epoxy, chloromethyl, bromomethyl, iodomethyl and blocked isocyanate. Examples of hydrophilic groups include hydroxyl, polyalkylene oxide, amino, carboxylic acid, sulfonic acid, phosphoric acid, alkali metal or alkaline earth metal salt of a carboxylic acid, a sulfonic acid, or a phosphoric acid, an ammonium salt in which a chlorine, bromine or iodine ion is the counter anion, and other ionic groups.

Examples of reactive/hydrophilic monomers not included in the hydrophobic core monomer include glycidyl (meth)acrylate, glycerol (meth)acrylate, hydroxymethyl (meth)acrylate, hydroxyethyl (meth)acrylate, 3-hydroxypropyl (meth)acrylate, 2-hydroxypropyl (meth)acrylate, 2,3-dihydroxypropyl (meth)acrylate, 3-chloro-2-hydroxypropyl (meth)acrylate, 3-hydroxybutyl (meth)acrylate, 4-hydroxybutyl (meth)acrylate, 2-hydroxybutyl (meth)acrylate, 2-acetoacetoxyethyl (meth)acrylate, 4-hydroxybutyl acrylate glycidyl ether, acrylic acid, methacrylic acid, trimethylsilyl (meth)acrylate, 2-(trimethylsilyloxy) ethyl (meth)acrylate, 2-(dimethylamino) ethyl (meth)acrylate, 2-(tert-butylamino) ethyl (meth)acrylate, dimethylaminoethyl methacrylate quaternary compound, and tetrahydrofurfuryl (meth)acrylate.

The hydrophobic core monomer may have at least one C₄₋₄₀-hydrocarbon group. The hydrocarbon group is preferably an aliphatic hydrocarbon group, particularly preferably a saturated aliphatic hydrocarbon group, and particularly preferably an alkyl group. The hydrocarbon group may be linear or branched. The hydrocarbon group may have ≥ 4, ≥ 6, ≥ 8, ≥ 10, ≥ 11, ≥ 12, ≥ 14, or 1≥ 6 carbon atoms, and preferably ≥ 6 carbon atoms. The hydrocarbon group has ≤ 40, ≤ 30, ≤ 25, ≤ 22 or ≤ 20 carbon atoms, and preferably ≤ 30 carbon atoms.

The hydrophobic core monomer may be a monomer of the formula (1) or (2):

CH₂=C(-R¹²)-C(=O)-Y¹¹-(R¹¹) (1)

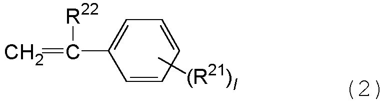

wherein R¹¹ is an aliphatic C₁₁₋₄₀-hydrocarbon group,
R²¹ is C₃₋₃₀-hydrocarbyl group,
R¹² and R²² are each independently H, halogen or a monovalent organic group,
Y¹¹ is a di- to tetravalent group composed of at least one selected from a direct bond, a di- to tetravalent C₁-hydrocarbon group, -C₆H₄-, -O-, -C(=O)-, -S(=O)₂- and - NR'-, where R' is H or C₁₋₄-hydrocarbyl, and
k and l are each independently 1-3.

R¹¹ and R²¹ are preferably a branched or long-chain (or long-chain linear) hydrocarbon group. The hydrocarbon group is preferably an aliphatic hydrocarbon group, particularly a saturated aliphatic hydrocarbon group, particularly alkyl. The -CH₃ group has a lower surface free energy than the -CH₂- group and tends to exhibit water-repellency. Therefore, a structure having many branches and many -CH₃ groups is preferred. On the other hand, a long-chain alkyl group having a certain length exhibits high water-repellency due to its crystallinity. Therefore, R¹¹ and R²¹ may be a branched hydrocarbon group (for example, branched alkyl), particularly t-butyl or isopropyl, a group having a multi-branched structure, or a long-chain hydrocarbon group (or long-chain linear hydrocarbon group), for example, alkyl. R¹¹ may have ≥ 11, ≥ 12, ≥ 14, ≥ 16 or ≥ 18 carbon atoms and preferably ≥ 12 carbon atoms. R¹¹ may have ≤ 25, ≤ 20, ≤ 15 or ≤ 10 carbon atoms. R²¹ may have ≥ 4, ≥ 6, ≥ 8, ≥ 10 or ≥ 12 carbon atoms. R²¹ may have ≤ 25, ≤ 15 or ≤ 10 carbon atoms.

k is 1, 2 or 3. When Y¹¹ has a tetravalent hydrocarbon group having 1 carbon atom, k is 3. When Y¹¹ has a trivalent hydrocarbon group having 1 carbon atom, k is 2. When Y¹¹ does not have a trivalent and tetravalent hydrocarbon group having 1 carbon atom (for example, when Y¹¹ has a divalent hydrocarbon group having 1 carbon atom (-CH₂-) (for example, 1-6)), k is 1.

R¹² and R²² may be H, methyl, halogen, optionally substituted benzyl, or optionally substituted phenyl. Examples of R¹² and R²² include H, methyl, Cl, Br, I, and cyano. R¹² and R²² are preferably H, methyl or Cl. R¹² is more preferably methyl. Since R¹² is methyl, higher water-repellency can be obtained. R²² is preferably H, particularly from the viewpoint of reactivity.

Y¹¹ is preferably a divalent group. Examples of the di-to tetravalent C₁-hydrocarbon group include -CH₂-, -CH= having a branched structure, and -C≡ having a branched structure.

Y¹¹ may be -Y'-, -Y'-Y'-, -Y'-C(=O)-, -C(=O)-Y'-, -Y' - C(=O)-Y'-, -Y'-X'-, -Y'-X'-Y'-, -Y'-X'-Y'-C(=O)-, -Y'-X'-C(=O)-Y'-, -Y'-X'-Y'-C(=O)-Y'-, or -Y'-X'-Y'-X'-,
wherein Y' is each independently a direct bond, - O-, -NR'-, wherein R' is H or a hydrocarbon group having 1-4 carbon atoms, or -S(=O)₂-;
X' is -(CH₂)ₘ-, wherein m is an integer of 1-5, a linear hydrocarbon group having 1-5 carbon atoms and an unsaturated bond, a hydrocarbon group having 1-5 carbon atoms and a branched structure, or -(CH₂)ₗ-C₆H₄-(CH₂)ₗ-, wherein l is each independently an integer of 0-5, and - C₆H₄- is a phenylene group. It is preferable that Y¹¹ is not only a divalent hydrocarbon group. When R¹¹ is - (CH₂)ⱼR¹³, Y11 may be a direct bond.

Specific examples of Y¹¹ include -O-, -NH-, -O-C(=O)-, - NH-C(=O)-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O- (CH₂)ₘ-NH-C(=O)*-*, -O-(CH₂)ₘ-NH-C(=O)-NH-, -O- (CH₂)ₘ-O-C₆H₄-, -O-(CH₂)ₘ-NH-S(=O)₂-, -O-(CH₂)ₘ-S(=O)₂-NH-, -NH-(CH₂)ₘ-NH-S(=O)₂-, -NH-(CH₂)ₘ-S(=O)₂-NH-, -NH-(CH₂)ₘ-O-C(=O)-NH-, - NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, or -NH-(CH₂)ₘ-NH-C₆H₄-, wherein m is an integer of 1-5, in particular 2 or 4.

Y¹¹ is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, - O-(CH₂)ₘ-NH-C(=O)-NH-, -O-(CH₂)ₘ-NH-S(=O)₂- or-O-(CH₂)ₘ-S(=O)₂-NH-, -NH-(CH₂)ₘ-O-C(=O)-, -NH-(CH₂)ₘ-NH-C(=O)-, -NH-(CH₂)ₘ-O-C(=O)-NH-, -NH- (CH₂)ₘ-NH-C(=O)-O-, -NH- (CH₂)ₘ-NH-C(=O)-NH-,
wherein m is an integer of 1-5, in particular 2 or 4. Y¹¹ is more preferably -O-, -O-(CH₂)ₘ-O-C(=O)-NH-, -O-(CH₂)ₘ-NH-C(=O)-O-, or -O-(CH₂)ₘ-NH-C(=O)-, -O-(CH₂)ₘ-NH-S(=O)₂-, or -O-(CH₂)ₘ-S(=O)₂-NH-, in particular -O-(CH₂)ₘ-NH-C(=O)-.

Specific examples of the hydrophobic core monomer are as follows. Although compounds of the following chemical formulas are acryl compounds having a hydrogen atom at the α-position, specific examples may include methacrylic compounds having a methyl group at the α-position and α-chloracrylic compounds having Cl at the α-position. Also in the styrene derivative, although compounds of the following chemical formulas are a hydrogen atom at the α-position, specific examples may include α-methylstyrene compounds having a methyl group at the α-position and α-chlorostyrene compounds having Cl at the α-position, and preferred are styrene compounds having H at the α-position.

CH₂=CHC(=O)OC₁₈H₃₇

CH₂=CHC(=O)OC₂H₄OC(=O)NHC₁₈H₃₇

CH₂=CHC(=O)OC₂H₄NHC(=O)OC₁₈H₃₇

CH₂=CHC(=O)OC₂H₄NHC(=O)OC₁₈H₃₇

CH₂=CHC(=O)OCₘH₂ₘNHC (=O)CₙH₂ₙ₊₁

CH₂=CHC(=O)OC₂H₄OC(=O)NHCₙH₂ₙ₊₁

CH₂=CHC(=O)OC₂H₄NHC(=O)OCₙH₂ₙ₊₁

CH₂=CHC(=O)OC₂H₄NHC(=O)NHCₙH₂ₙ₊₁

CH₂=CHC(=O)OC₄H₈OC(=O)NHCₙH₂ₙ₊₁

CH₂=CHC(=O)NHCₘH₂ₘOC(=O)NHCₙH₂ₙ₊₁

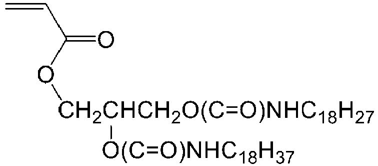

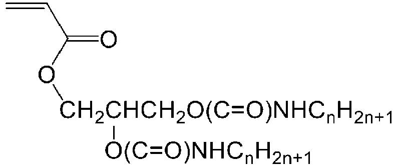

CH₂=CHC(=O) OCₘH₂ₘNHSO₂CₙH₂ₙ₊₁

CH₂=CHC(=O) OCₘH₂ₘSO₂NHCₙH₂ₙ₊₁

wherein n is a number of 11-40 and m is a number of 1-5.

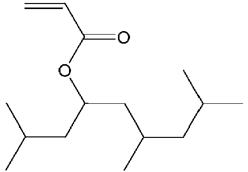

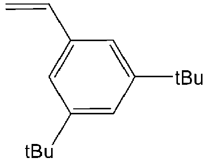

Preferred examples of hydrophobic core monomers include stearyl (meth)acrylate, stearic acid amidoethyl (meth) acrylate, CH₂=CHC(=O)OC₂H₄NHSO₂C₁₈H₃₇, t-butylstyrene and 2,4-di-t-butylstyrene.

### · Crosslinkable core monomer

The core polymer may have a repeating unit derived from a crosslinkable core monomer having at least two ethylenically unsaturated double bonds. In other words, the core polymer may be cross-linked.

The crosslinkable core monomer has at least two (particularly two, three or four) ethylenically unsaturated double bonds. The crosslinkable monomer (3) is a fluorine-free monomer.

It is preferable that the crosslinkable monomer is a monomer of the formula: 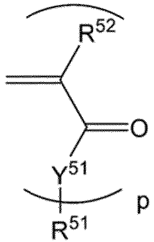 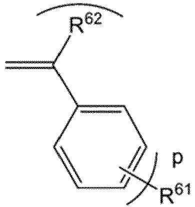 or 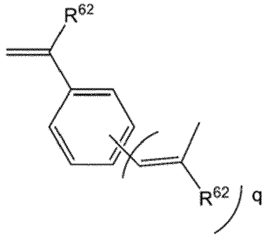
wherein R⁵¹ and R⁶¹ are each independently a direct bond or a divalent to hexavalent group composed of at least one selected from a C₁₋₂₀-hydrocarbon group, -(CH₂CH₂O)ᵣ-, where r is an integer of 1-10, -C₆H₄-, -O- and -NR'-, where R' is H or a hydrocarbon group having 1-4 carbon atoms,
R⁵² and R⁶² are H, halogen or a monovalent organic group,
Y⁵¹ is -O- or -NR'-, where R' is H or a hydrocarbon group having 1-4 carbon atoms,
p is 2-6 and
q is 1-5.

Examples of R⁵¹ and R⁶¹ include a group including a direct bond, a di- to hexavalent group (for example, di- to tetravalent or di- or trivalent) hydrocarbon group, an ethylene glycol group, a propylene glycol group, a glycerol group, cyclohexyl, dicyclopentanyl, adamanthyl, isobornyl, a naphthalene group, bornyl, tricyclodecanyl or phenyl.

R⁵² and R⁶² may each independently be H, methyl, halogen, optionally benzyl or optionally substituted phenyl. Examples of R⁵² and R⁶² include H, methyl, Cl, Br, I and cyano. R⁵² and R⁶² are preferably H, methyl or Cl. R⁵² is more preferably methyl. Since R⁵² is methyl, higher water-repellency can be obtained. R⁶² is preferably H particularly from the viewpoint of reactivity, but is preferably methyl from the viewpoint of water repellency, and R⁶² is preferably selected so as to satisfy both the reactivity and water-repellency.

Examples of cross-linkable core monomers include divinylbenzene, 1,4-butanediol di(meth)acrylate, 1,6-hexanediol di(meth)acrylate, 1,9-nonanediol di(meth)acrylate, neopentyl glycol di(meth)acrylate, polyethylene glycol di(meth)acrylate, triethylene glycol di(meth)acrylate, ethylene glycol di(meth)acrylate, methylene glycol di(meth)acrylate, polytetramethylene glycol di(meth)acrylate, dimethyloltricyclodecane di(meth)acrylate, trimethylolpropane tri(meth)acrylate, adamantyl di(meth)acrylate, glycerin di(meth)acrylate, tricyclodecane dimethanol di(meth)acrylate, dicyclopentanyl di(meth)acrylate, 5-hydroxy-1,3-adamantane di(meth)acrylate, pentaerythritol triacrylate, pentaerythritol tetraacrylate and dipentaerythritol hexaacrylate

### (Shell polymer)

The shell polymer forms the shell of the core-shell structure. The shell polymer may be formed of a non-fluorine polymer or a fluorine-containing polymer. The shell polymer may be a random polymer.

The shell polymer may have a Tg or a melting point lower than the Tg or the melting point of the core polymer. For example, the shell polymer has a Tg lower than the Tg of the core polymer or a melting point lower than the melting point of the core polymer. The higher of the Tg and the melting point of the shell polymer may be lower than the higher of the Tg and the melting point of the core polymer.

When the core polymer has a repeating unit derived from a crosslinkable core monomer having at least two ethylenically unsaturated double bonds, the shell polymer may have a Tg or a melting point less than the 10% thermal decomposition temperature, less than the 5% thermal decomposition temperature or less than the 1% thermal decomposition temperature of the core polymer. When the 10% thermal decomposition temperature of the core polymer is defined as T¹⁰, the shell polymer has a Tg or a melting point of less than T¹⁰, preferably T¹⁰-10°C or less, more preferably T¹⁰-20°C or less, and further preferably T¹⁰-50°C or less. A larger difference between them allows a broader range of processing (applications) of the organic fine particle. The 10% thermal decomposition temperature means a value obtained by TGA (thermogravimetric analysis) in air under conditions of a temperature increase rate of 10°C/minute.

The difference between the Tg of the shell polymer and the Tg of the core polymer may be ≥ 5°C, ≥ 10°C, ≥ 15°C, ≥ 20°C, ≥ 25°C, ≥ 30°C, ≥ 35°C, or ≥ 40°C, and preferably ≥ 20°C. The difference between the Tg of the shell polymer and the Tg of the core polymer may be ≤ 100°C, ≤ 90°C, ≤ 80°C, ≤ 70°C, ≤ 60°C or ≤ 50°C, and preferably ≤ 90°C.

The shell polymer may have a Tg or a melting point of - 120°C or more, -100°C or more, -80°C or more, -60°C or more, -50°C or more, -45°C or more, or -40°C or more, and preferably -100°C or more. The shell polymer may have a Tg or a melting point of < 15°C, ≤ 12°C, ≤ 10°C, ≤ 7.5°C, ≤ 5°C, ≤ 2.5°C, ≤ 0°C, -2.5°C or less, -5°C or less, or -7.5°C or less, and preferably -10°C or less. It is preferable that the Tg or the melting point of the shell polymer is in the above range in consideration of film formability.

The shell polymer may have a water contact angle of < 100°, ≤ 99°, ≤ 98°, or ≤ 95°. It is preferable that the shell polymer has a water contact angle in the above range from the viewpoint of water-repellency and dispersibility in dispersion (in particular, dispersibility in water) of the organic fine particle.

It is preferable that the shell polymer has a water contact angle lower than the water contact angle of the core polymer. The difference between the water contact angle of the shell polymer and the water contact angle of the core polymer may be ≥ 1°, ≥ 2°, ≥ 3° or ≥ 4°, and preferably ≥ 2°.

### · Water-insoluble shell monomer

The shell polymer has a repeating unit derived from a monofunctional monomer. All monofunctional monomers constituting the shell polymer are a water-insoluble shell monomer. The monofunctional monomers constituting the shell polymer may be a water-insoluble shell monomer of which homopolymer has a water contact angle of less than 100°. The homopolymer of the water-insoluble shell monomer may have a water contact angle of ≥ 10°, ≥ 30°, ≥ 50°, ≥ 70°, ≥ 80° or 90°. The homopolymer of the water-insoluble shell monomer may have a water contact angle of < 100°, ≤ 99°, ≤ 98°, ≤ 90°, ≤ 80°, ≤ 70°, ≤ 60°, ≤ 50° or ≤ 40°, and preferably 99° or 90° or less. It is preferable that the homopolymer of the water-insoluble shell polymer has a water contact angle in the above range from the viewpoint of water-repellency and dispersibility in dispersion (in particular, dispersibility in water) of the organic fine particle.

The water-insoluble shell monomer may have a solubility in water at 25°C of ≤ 10 g/l, ≤ 5 g/l, ≤ 3 g/l, ≤ 1 g/l, ≤ 0.5 g/l, or ≤ 0.1 g/l, and preferably ≤ 3 g/l.

The homopolymer of the water-insoluble shell monomer may have a solubility in water at 25°C of ≤ 10 g/l, ≤ 5 g/l, ≤ 3 g/l, ≤ 1 g/l, ≤ 0.5 g/l or ≤ 0.1 g/l, and preferably ≤ 3 g/l.

It is not preferable to use a water-soluble shell monomer (e.g., an unsaturated carboxylic acid monomer such as acrylic acid and methacrylic acid; a polyethylene glycol chain-containing monomer such as poly(ethylene glycol) methacrylate; an amphipathic monomer such as 2-methacryloyloxyethylphosphoryl choline and carboxymethyl betaine monomer; and quaternary ammonium salt-containing acrylate), because the shell polymer becomes more hydrophilic and as a result reduces water-repellency of the organic fine particle significantly.

The water-insoluble shell monomer has at least one C₁₋₁₀-hydrocarbyl or C₁-fluoroalkyl group.

The water-insoluble shell monomer may have at least one C₃₋₁₀-hydrocarbon group . The hydrocarbon group is preferably an aliphatic hydrocarbon group, particularly preferably a saturated aliphatic hydrocarbon group, and particularly preferably alkyl. The hydrocarbon group may be linear or branched. The hydrocarbon group may have ≥ 3, ≥ 4, ≥ 5, ≥ 6, or ≥ 7 carbon atoms. The hydrocarbon group may have ≤ 10, or ≤ 9 carbon atoms.

The water-insoluble shell monomer may have at least one C₁-fluoroalkyl group. Examples include -CF₃, -CF₂H and - CFH₂. It is preferable that the fluoroalkyl is perfluoroalkyl.

It is preferable that the water-insoluble shell monomer includes an aliphatic compound. The water-insoluble shell monomer may be composed only of an aliphatic compound. For example, when the core polymer is not crosslinked, the water-insoluble shell monomer may be composed only of an aliphatic compound.

The water-insoluble shell monomer may be a monomer of the formula (3) or (4) :

CH₂=C(-R³²)-C(=O)-Y³¹-(R³¹)ₘ (3)

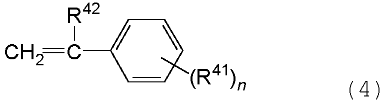

wherein R³¹ is an aliphatic C₁₋₁₀-hydrocarbon group or -(CH₂)ᵢR³³, where R³³ is C₁-fluoroalkyl and i is 1-6, for example, 1-4 or 2-3,
R⁴¹ is a hydrocarbon group having 1-2 carbon atoms,
R³² and R⁴² are each independently H, halogen or a monovalent organic group,
Y³¹ is a di- to tetravalent group composed of at least one selected from a direct bond, a di- to tetravalent C₁-hydrocarbon group, -C₆H₄-, -O-, -C(=O)-, -S(=O)₂- and - NR'-, where R' is H or a C₁₋₄-hydrocarbon group, and
m is 1-3 and n is 0-3.

It is preferable that R³¹ and R⁴¹ are a branched or long-chain (or linear long-chain) hydrocarbon group. The hydrocarbon group is preferably an aliphatic hydrocarbon group, particularly preferably a saturated aliphatic hydrocarbon group, and particularly preferably alkyl. R³¹ may have ≥ 1, ≥ 3, ≥ 4, ≥ 5, ≥ 6, or ≥ 7 carbon atoms, and ≤ 10, or ≤ 9 carbon atoms.

R³³ is C₁-fluoroalkyl. Examples include -CF₃, -CF₂H and - CFH₂. It is preferable that the fluoroalkyl is perfluoroalkyl..

m is 1, 2 or 3. When Y³¹ has a tetravalent C₁-hydrocarbon group, m is 3. When Y³¹ has a trivalent C₁-hydrocarbon, m is 2. When Y³¹ does not have a tri- or tetravalent C₁-hydrocarbon group (for example, when Y³¹ has a divalent C₁-hydrocarbon group (-CH₂-) (e.g., 1-6 groups)), m is 1.

R³² and R⁴² may be H, methyl, halogen, optionally substituted benzyl, optionally substituted phenyl, or -CF₃. Examples of R³² and R⁴² include H, methyl, Cl, Br, I, F, - CF₃ and cyano. R³² and R⁴² are preferably H, methyl or Cl. R¹² is more preferably methyl.

Y¹¹ is preferably a divalent group. Examples of the di-to tetravalent C₁-hydrocarbon group include -CH₂-, -CH= having a branched structure, and -C≡ having a branched structure.

Y³¹ may be -Y'-, -Y'-Y'-, -Y'-C(=O)-, -C(=O)-Y'-, -Y'-C(=O)-Y'-, -Y'-X'-, -Y'-X'-Y'-, -Y'-X'-Y'-C(=O)-, -Y'-X'-C(=O)-Y'-, -Y'-X'-Y'-C(=O)-Y'-, or -Y'-X'-Y'-X'- wherein Y' is each independently a direct bond, -O-, -NR'-, wherein R' is H or a C₁₋₄-hydrocarbon group, or -S(=O)₂-; X' is - (CH₂)m-, wherein m is an integer of 1-5), a linear C₁₋₅-hydrocarbon group having an unsaturated bond, a C₁₋₅-hydrocarbon group having a branched structure, or -(CH₂)ₗ-C₆H₄-(CH₂)ₗ-, wherein l is each independently an integer of 0-5 and -C₆H₄- is phenylene). It is preferable that Y³¹ is not only a divalent hydrocarbon group. When R³¹ is - (CH₂)ᵢR³³, Y³¹ may be a direct bond.

Specific examples of Y³¹ include -O-, -NH-, -O-C(=O)-, - NH-C(=O)-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O- (CH₂)ₘ-NH-, -NH- (CH₂)ₘ*-*O*-,* -O- (CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O- (CH₂)ₘ-NH-C(=O)-O-, -O-(CH₂)ₘ-C(=O)-NH-, -O-(CH₂)ₘ-NH-C (=O)*-,* -O- (CH₂)ₘ-NH-C(=O)-NH-, -O- (CH₂)ₘ-O-C₆H₄-, -O-(CH₂)ₘ-NH-S(=O)₂-, -O- (CH₂)ₘ-S(=O)₂-NH-, -NH- (CH₂)ₘ-NH-S(=O)₂-, -NH-(CH₂)ₘ-S(=O)₂-NH-, -NH-(CH₂)ₘ-O-C(=O)-NH-, - NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄- or -NH-(CH₂)ₘ-NH-C₆H₄- wherein m is an integer of 1-5, in particular 2 or 4.

Y³¹ is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, - O-(CH₂)ₘ-NH-C(=O)-NH-, -O-(CH₂)ₘ-NH-S(=O)₂- or -O-(CH₂)ₘ-S(=O)₂-NH-, -NH-(CH₂)ₘ-O-C(=O)-, -NH-(CH₂)ₘ-NH-C(=O)-, -NH-(CH₂)ₘ-O-C(=O)-NH-, -NH-(CH2)ₘ-NH-C(=O)-O-, -NH-(CH2)ₘ-NH-C(=O)-NH- wherein m is an integer of 1-5, in particular 2 or 4. Y³¹ is more preferably -O-, -O-(CH₂)ₘ-O-C(=O)-NH-, - O-(CH₂)ₘ-NH-C(=O)-O-, or -O-(CH₂)ₘ-NH-C(=O)-, -O-(CH₂)ₘ-NH-S(=O)₂-, or -O-(CH₂)ₘ-S(=O)₂-NH-, and particularly preferably -O-(CH₂)ₘ-NH-C(=O)-.

Specific examples of water-insoluble shell monomers are as follows. The compounds of the following chemical formulas are an acrylic compound having a hydrogen atom at the α-position, and may be a methacrylic compound having methyl at the α-position and an α-chloroacrylic compound having Cl at the α-position. Likewise, for styrene derivatives, the compounds of the following chemical formulas have H at the α-position, and specific examples may be α-methylstyrene compounds having methyl at the α-position and α-chlorostyrene compounds having Cl at the α-position. Styrene compounds having H at the α-position are preferred.

CH₂=CHC(=O)OCₘH₂ₘNHC(=O)CₙH₂ₙ₊₁

CH₂=CHC(=O)OC₂H₄OC(=O)NHCₙH₂ₙ₊₁

CH₂=CHC(=O)OC₂H₄NHC(=O)OCₙH₂ₙ₊₁

CH₂=CHC(=O)OC₂H₄NHC(=O)NHCₙH₂ₙ₊₁

CH₂=CHC(=O)OC₄H₈OC(=O)NHCₙH₂ₙ₊₁

CH₂=CHC(=O)NHCₘH₂ₘOC(=O) NHCₙH₂ₙ₊₁

CH₂=CHC(=O)OCₘH₂ₘNHSO₂CₙH₂ₙ₊₁

CH₂=CHC(=O)OCₘH₂ₘSO₂NHCₙH₂ₙ₊₁

CH₂=CHC(=O)OCₘH₂ₘCF₃

CH₂=CHC(=O)OCH₂CF₃

wherein n is a number of 3-10 and m is a number of 1-5.

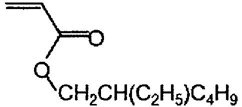

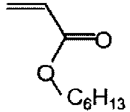

Preferred specific examples of water-insoluble monomers include 2-ethylhexyl (meth)acrylate, hexyl (meth)acrylate, octyl (meth)acrylate, 2-ethylhexyl (meth)acrylate, and hexyl (meth)acrylate.

### · Crosslinkable shell monomer

The shell polymer may have a repeating unit derived from a crosslinkable shell monomer having at least two ethylenically unsaturated double bonds, although it is preferable that the shell polymer does not have a repeating unit derived from a crosslinkable shell monomer having at least two ethylenically unsaturated double bonds. In other words, the shell polymer may not be cross-linked.

The crosslinkable shell monomer may be a fluorine-free monomer, and may be the same as those described in the section of the crosslinkable core monomer above.

For each of the hydrophobic core monomer, the crosslinkable core monomer, the water-insoluble shell monomer and the crosslinkable shell monomer, one may be used alone or a mixture of two or more of them may be used.

As used herein, "(meth)acrylate" means acrylate or methacrylate, and "(meth)acrylamide" means acrylamide or methacrylamide.

### (Compositional feature of organic particle)

In the organic fine particle, the weight ratio of the core polymer may be ≥ 5 wt%, ≥ 15 wt%, ≥ 30 wt%, ≥ 50 wt%, ≥ 75 wt% or ≥ 90 wt %, and more preferably ≥ 30 wt%. In the organic fine particle, the weight ratio of the core polymer may be ≤ 95 wt%, ≤ 75 wt%, ≤ 60 wt%, ≤ 50 wt%, ≤ 30 wt% or ≤ 25 wt%. In the organic fine particle, the weight ratio of the shell polymer may be ≥ 5 wt%, ≥ 15 wt%, ≥ 30 wt%, ≥ 50 wt%, ≥ 75 wt% or ≥ 90 wt%, and preferably ≥ 30 wt%. In the organic fine particle, the weight ratio of the shell polymer may be ≤ 95 wt%, ≤ 75 wt%, ≤ 60 wt%, ≤ 50 wt%, ≤ 30 wt%, or ≤ 25 wt%.

In the core polymer, the repeating unit derived from the hydrophobic core monomer may be ≥, ≥ 75, ≥ 80, ≥ 85, ≥ 90 or ≥ 95 parts by mole, based on 100 parts by mole in total of the repeating units. In the core polymer, the repeating unit derived from the hydrophobic core monomer may be ≤ 100 , ≤ 99, ≤ 97.5, ≤ 95, or ≤ 92.5 parts by mole, based on 100 parts by mole in total of the repeating units.

In the core polymer, the repeating unit derived from the crosslinkable core monomer may be ≥ 0.1, ≥ 0.3, ≥ 0.5, ≥ 0.75, ≥ 1.5 or ≥ 3.0 parts by mole, based on 100 parts by mole in total of the repeating units. In the core polymer, the repeating unit derived from the crosslinkable core monomer may be ≤ 30, ≤ 20, ≤ 10, ≤ 5, ≤ 3, ≤ 1.5, ≤ 1.0 or ≤ 0.5 parts by mole , based on 100 parts by mole in total of the repeating units.

In the shell polymer, the repeating unit derived from the water-insoluble shell monomer may be ≥ 70, ≥ 75, ≥ 80, ≥ 85, ≥ 90 or ≥ 95 parts by mole, based on 100 parts by mole in total of the repeating units. In the shell polymer, the repeating unit derived from the water-insoluble shell monomer may be ≤ 100, ≤ 99, ≤ 97.5, ≤ 95 or ≤ 92.5 parts by mole, based on 100 parts by mole in total of the repeating units.

In the shell polymer, the repeating unit derived from the crosslinkable shell monomer may be ≤ 0.5 or ≤ 0.1 parts by mole, and preferably 0 parts by mole (not cross-linked) based on 100 parts by mole in total of the repeating units.

The amount of the organic fine particle may be ≥ 0.1 wt%, ≥ 1 wt%, ≥ 3 wt%, ≥ 5 wt%, or ≥ 10 wt% based on the composition. The amount of the liquid medium may be ≤ 75 wt%, ≤ 50 wt%, ≤ 30 wt%, ≤ 15 wt%, or ≤ 10 wt% based on the composition.

### [Liquid medium]

The water-repellent composition comprises a liquid medium, preferably an aqueous medium. The liquid medium is water alone, an organic solvent alone or a mixture of water and an organic solvent, and preferably water alone or a mixture of water and an organic solvent.

When the liquid medium is a mixture of water and an organic solvent, the amount of the organic solvent may be ≥ 30 wt%, ≥ 50 wt%, ≥ 75 wt%, or ≥ 90 wt% based on the liquid solvent. The amount of the organic solvent is ≤ 90 wt%, ≤ 50 wt%, ≤ 30 wt%, or ≤ 10 wt% based on the liquid medium.

The amount of the liquid medium may be ≥ 30 wt%, ≥ 50 wt%, ≥ 60 wt%, ≥ 75 wt%, or ≥ 90 wt% based on the composition. The amount of the liquid medium may be ≤ 95 wt%, ≤ 75 wt%, or ≤ 50 wt% based on the composition.

### [Binder resin]

The water-repellent composition may comprise a binder resin. The binder resin acts as a binder for binding the organic fine particles to the substrate. The binder resin is preferably a water-repellent resin. The water-repellent resin also acts as an active ingredient that exhibits water-repellency. Examples of the binder resin (C) include an acrylic polymer, a urethane polymer, a polyolefin, a polyester, a polyether, a polyamide, a polyimide, a polystyrene, and a silicone polymer. The amount of the binder resin may be 0.1-20 parts by weight (pbw), for example 0.1-10 pbw based on 100 pbw of the organic fine particle.

### [Dispersant]

The water-repellent composition may comprise a dispersant in order to improve dispersibility of the organic fine particle. The dispersant may be a polymer dispersant, and is preferably a hydrophilic polymer dispersant. Polyvinyl pyrrolidone, polyvinyl alcohol, polyglycerol and polyacrylate may be used as the dispersant. The amount of the dispersant may be 0.1-20 pbw, for example 0.1-10 pbw based on 100 pbw of the organic fine particle. The dispersant may be removed from the water-repellent composition before water-repellent treatment.

### [Surfactant]

The water-repellent composition may contain or may not contain a surfactant (emulsifier). In general, in order to stabilize the particles during polymerization and stabilize the aqueous dispersion after polymerization, a surfactant may be added in a small amount (for example, 0.01-15 pbw based on 100 pbw of the monomer) during or after the polymerization.

Especially when the object to be treated is a textile product, it is preferable that the surfactant contains a nonionic surfactant in the water-repellent composition. Furthermore, it is preferable that the surfactant comprises one or more surfactants selected from a cationic surfactant, an anionic surfactant and an amphoteric surfactant. It is preferable to use a nonionic surfactant and a cationic surfactant in combination.

For each of the nonionic surfactant, the cationic surfactant and the amphoteric surfactant, one of them may be used, or two or more of them may be used in combination.

The amount of the surfactant may be ≤ 15 pbw, ≤ 10 pbw, ≤ 7.5 pbw, ≤ 5 pbw, or ≤ 2.5 pbw based on 100 pbw of the organic fine particle. In general, when a surfactant is added, the stability of the aqueous dispersion and the permeability into fabric are improved, but the water-repellency is lowered. It is preferable to select the type and amount of the surfactant so as to achieve both of these effects. The organic fine particle of the present disclosure has excellent water-repellency and dispersibility (in particular, dispersibility in water), and thus the amount of the surfactant can be reduced.

### [Other additives]

The water-repellent composition may also comprise other additives. Examples of other additives include a binder resin, a water repellent agent, an oil repellent agent, a drying rate adjuster, a cross-linking agent, a film formation agent, a compatibilizer, an antifreezing agent, a viscosity adjuster, an ultraviolet absorber, an antioxidant, a pH adjuster, a antifoaming agent, a texture modifier, a slippage modifier, an antistatic agent, a hydrophilizing agent, an antibacterial agent, a preservative, an insect repellent, a fragrant agent and a flame retarder. The amount of other additives may be 0.1-20 pbw, and for example 0.1-10 pbw based on 100 pbw of the organic fine particle.

### <Method for producing organic fine particle and water-repellent composition>

A known method may be used as the method for preparing the core shell polymer constituting the organic fine particle, and seed polymerization is preferably used. The seed polymerization is a method in which core polymer particles prepared by polymerization of the first monomer are used as seed particles and the second monomer is polymerized in the vicinity of the surface of the seed particles to prepare a core-shell polymer.

The method for producing the polymers (the core polymer, the core-shell polymer) is not limited as long as a water-repellent composition in the form of an aqueous medium is obtained. For example, the polymer (organic fine particles) may be produced by polymerizing a monomer for organic fine particles in an aqueous medium in the presence or absence of a surfactant. Alternatively, an aqueous dispersion can be obtained by producing a polymer by solution polymerization, adding a surfactant and water, and removing the solvent.

When the water-repellent composition contains organic fine particles and a binder resin, the water-repellent composition containing organic fine particles and a binder resin can be produced by separately producing an aqueous dispersion of organic fine particles and an aqueous dispersion of a binder resin, and mixing the aqueous dispersion of organic fine particles and the aqueous dispersion of a binder resin. Alternatively, the water-repellent composition containing organic fine particles and a binder resin can be produced by polymerizing a monomer for the binder resin in an aqueous dispersion of the organic fine particles. Alternatively, the water-repellent composition containing organic fine particles and a binder resin can be produced by polymerizing a monomer for the organic fine particles in an aqueous dispersion of the binder resin.

In emulsion polymerization without using a surfactant, it is preferable to polymerize the monomer in an aqueous medium at a low concentration (for example, a monomer concentration of 1-30 wt%, particularly 1-15 wt%).

In the solution polymerization, a method is employed in which the monomer is dissolved in an organic solvent in the presence of a polymerization initiator, nitrogen substitution is performed, and then heating and stirring are performed in the range of 30-120°C for 1-10 hours. Examples of the polymerization initiator include azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in the range of 0.01-20 parts by mole, for example, 0.01-10 parts by mole based on 100 parts by mole of the monomer.

The organic solvent is inert to the monomers and dissolves or homogeneously disperses them, and may be, for example, an ester (for example, an ester having 2-30 carbon atoms, specifically ethyl acetate, or butyl acetate), a ketone (for example, a ketone having 2-30 carbon atoms, specifically methyl ethyl ketone or diisobutyl ketone), or an alcohol (for example, an alcohol having 1-30 carbon atoms, specifically isopropyl alcohol, ethanol or methanol). Specific examples of organic solvents include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane, and trichlorotrifluoroethane. The organic solvent is used in an amount of 50-99.5 pbw, for example, 70-99 pbw based on 100 pbw of the total of the monomer and the organic solvent.

In the emulsion polymerization, a method is employed in which the monomer is emulsified in water in the presence of a polymerization initiator and a surfactant, nitrogen substitution is performed, and then stirring and polymerization are performed in the range of 30-80°C for 1-10 hours. Water-soluble polymerization initiators such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, 2,2'-azobis(2-methylpropionamidine) dihydrochloride, 4,4'-azobis(4-cyanovaleric acid), 2,2'-azobis[2-methyl-N-(2-hydroxyethyl)propionamide], 2,2'-azobis[2-(2-imidazolin-2-yl)propane] dihydrochloride, 2,2'-azobis[2-(2-imidazolin-2-yl)propane], sodium peroxide, potassium persulfate, and ammonium persulfate, and oil-soluble polymerization initiators such as azobisisobutyronitrile, benzoyl peroxide, di-t-butyl peroxide, lauryl peroxide, cumene hydroperoxide, t-butyl peroxypivalate and diisopropyl peroxydicarbonate may be used as a polymerization initiator. The polymerization initiator is used in the range of 0.01-10 parts by mole based on 100 parts by mole of the monomer. If necessary, a reducing agent such as rongalite, ascorbic acid, tartaric acid, sodium disulfite, isoascorbic acid and ferrous sulfate may also be used in combination.

As the surfactant, various anionic, cationic or nonionic surfactants can be used, and the surfactant is used in the range of 0.5-20 pbw based on 100 pbw of the monomer. Anionic and/or nonionic and/or cationic surfactants are preferably used. When the monomers are not completely compatible with each other, it is also preferable to add a compatibilizer, for example, a water-soluble organic solvent, which is sufficiently compatible with these monomers. By adding the compatibilizer, it is possible to improve the emulsifiability and copolymerizability.

Examples of the water-soluble organic solvent include acetone, methyl ethyl ketone, ethyl acetate, propylene glycol, dipropylene glycol monomethyl ether, dipropylene glycol, tripropylene glycol, ethanol, and methanol, and the water-soluble organic solvent may be used in the range of 0.1-50 pbw, for example 1-40 pbw, based on 100 pbw of water.

A chain transfer agent may be used in the polymerization. The molecular weight of the polymer can be changed according to the amount of the chain transfer agent used. Examples of chain transfer agents are mercaptan group-containing compounds such as lauryl mercaptan, thioglycol, and thioglycerol (particularly alkyl mercaptan (having 1-30 carbon atoms, for example)), and inorganic salts such as sodium hypophosphite and sodium bisulfite. The amount of the chain transfer agent used may be in the range of 0.01-10 pbw, for example, 0.1-5 pbw, based on 100 pbw of the total amount of the monomers.

### <Application of water-repellent composition>

The water-repellent composition (and the aqueous dispersion of organic fine particles) can be used as an external treatment agent (surface-treatment agent) or an internal treatment agent. The water-repellent composition (and the aqueous dispersion of organic fine particles) can be used as an oil-repellent, a soil resistant agent, a soil release agent, a release agent, or a mold release agent.

By treating a substrate with the water-repellent composition, a surface coating structure in which the organic fine particles in the water-repellent composition are arranged on the surface of the substrate is formed. The surface coating structure has an uneven structure caused by the organic fine particles.

The fiber product treated therewith is dried, preferably heated at a temperature of Tg or more of the shell polymer, for example, 100-200°C to develop water repellency. Treatment at the temperature of Tg or more of the shell polymer allows the shell polymer to move to the substrate. By contrast the hydrophobic core keeps its shape because it has high Tg. This provides a highly hydrophobic surface coating structure.

The surface coating structure may be formed by applying the water-repellent composition to a material to be treated (a substrate) by a known method. Usually, the water-repellent composition is diluted by dispersing it in an organic solvent or water, and is adhered to the surface of the object to be treated by a known method such as immersion coating, spray coating, or foam coating, and then dried. If necessary, the water-repellent composition may be applied together with a suitable cross-linking agent (for example, blocked isocyanate) for curing. Further, it is also possible to add an insect repellent, a softening agent, an antibacterial agent, a flame retarder, an antistatic agent, a coating material fixing agent, a wrinkle-resistant agent to the water-repellent composition and use in combination. The concentration of the polymer in the treatment liquid to be brought into contact with the substrate may be 0.01-10 wt% (particularly in the case of dip coating), for example, 0.05-10 wt%.

Examples of the object to be treated with the water-repellent composition (and the aqueous dispersion of organic fine particles) include textile products, stone materials, filters (for example, electrostatic filters), antidust masks, components of fuel cells (for example, gas diffusion electrodes and gas diffusion supports), glass, paper, wood, leather, fur, asbestos, bricks, cement, metals and oxides, ceramic products, plastics, coated surfaces and plasters. Various examples can be given as textile products. Examples of the textile products include various products such as animal and plant natural fibers such as cotton, hemp, wool and silk fibers, synthetic fibers such as polyamide, polyester, polyvinyl alcohol, polyacrylonitrile, polyvinyl chloride and polypropylene fibers, semisynthetic fibers such as rayon and acetate fibers, inorganic fibers such as glass fibers, carbon fibers and asbestos fibers, and mixtures of any of these fibers.

The water-repellent composition can also be used as an external mold release agent. For example, a surface of a substrate can be easily peeled from another surface (another surface on the substrate or a surface on another substrate) .

The water-repellent compositions can be applied to fibrous substrates (for example, textile products) by any of the methods known for treating textile products with liquids. When the textile product is fabric, the fabric may be soaked in the solution, or the solution may be applied or sprayed to the fabric.

The water-repellent compositions may be applied to a textile product through a cleaning method, and may be, for example, applied to a textile product in washing application or a dry cleaning method.

The textile product to be treated is typically a fabric, and examples of the fabric include woven fabrics, knitted fabrics, nonwoven fabrics, clothing fabrics and carpets, or the textile product may also be a fiber, a yarn or an intermediate textile product (for example, a sliver or a rove). The textile product material may be a natural fiber (for example, cotton or wool fiber), a chemical fiber (for example, viscose rayon or lyocell), a synthetic fiber (for example, polyester, polyamide or acrylic fiber), or a mixture of fibers (for example, mixture of natural fibers and synthetic fibers).

Alternatively, the fibrous substrate may be leather. For making the leather hydrophobic and lipophobic, the organic fine particles may be applied to the leather in various stages of leather processing, for example in a leather wetting processing period or a leather finishing period.

Alternatively, the fibrous substrate may be paper. The organic fine particles may be applied to paper molded in advance, or applied in various stages of papermaking, for example in a paper drying period.

The "treatment" means that by e.g. immersion, spraying or coating, the treatment agent is applied to the object to be treated. The treatment causes the organic fine particles as an active ingredient of the treatment agent to permeate the inside of the object to be treated and/or adhere to a surface of the object to be treated.

In the treated substrate (particularly textile products), the falling speed of water is preferably ≥ 130 mm/sec, and for example, preferably ≥ 150 mm/sec or ≥ 200 mm/sec.

The treated substrate exhibits the effect of preventing frost formation.

### Examples

Hereinafter, the present disclosure will be described in detail with reference to Examples. In the following, parts or % or ratios represent parts by weight or % by weight or weight ratios unless otherwise specified.

### <Test method>

### (Method of measuring Tg and melting point)

The melting point of the polymer was calculated by differential scanning calorimetry (DSC). In the DSC measurement, under a nitrogen atmosphere, the copolymer was cooled to -20°C, then the temperature was raised at 10°C/minute to 200°C, and the polymer was cooled again to -20°C, and thereafter, the melting point observed in the temperature rising process at 10°C/minute to 200°C was measured. In a polymer in which a plurality of melting peaks appear, the peak having the largest quantity of heat of melting, which was derived from melting of long-chain alkyl, was taken as the melting point. The glass transition point (glass transition temperature) was determined by obtaining a DSC curve by determining the temperature indicated by the midpoint of the intersection between the extension of the baseline before and after the second order transition of the DSC curve and the tangent at the inflection point of the DSC curve.

### (Method of measuring water contact angle of polymer)

For the water contact angle of the polymer, a silicon wafer substrate was spin-coated with a chloroform solution of the resulting polymer with a solid concentration of 1.0% and the static water contact angle was measured. The static contact angle was obtained by dropping 2 µL of water on a coating film and measuring the contact angle 1 minute after the droplet reached the film.

### (Method of measuring solubility in water)

For the solubility in water of the polymer, water (25°C) and a sample were mixed in the same weight using a stirrer under conditions of a rotational number of 300 rpm and 30 minutes, and then the aqueous phase was collected and dried at 100°C for 1 hour, and the amount of the polymer in the aqueous phase was determined from loss on drying to calculate the solubility in water of the polymer. For the solubility in water of the monomers, the respective monomers were added in small batches to a predetermined amount of water, and the solubility in water was determined from the amount of dissolution when no more monomer could be dissolved (floating, precipitation or deposition occurred, or the solution became clouded).

Properties of stearyl acrylate (SA) and 2-ethyhexyl methacrylate (EHMA) used in Examples are as follows.

**[Table 1]**

| | Tg of homopolymer (°C) | Melting point of homopolymer (°C) | Water contact angle of homopolymer (°) | Solubility in water of homopolymer (g/L) | Solubility in water of monomer (g/L) |
|---|---|---|---|---|---|
| SA | 30 | 50 | 102 | <0.1 | <0.1 |
| EHMA | -15 | None | 97 | <0.1 | <0.1 |

### <Example 1 PSA/PEHMA core-shell particle>

### [Preparation of PSA particle]

A predetermined amount of SA (Tg of homopolymer: 30°C), 2,2'-azobisisobutyronitrile (AIBN), polyvinylpyrrolidone (PVP) (K-30, molecular weight: 40,000) and ethanol were placed in a sealed tube under conditions shown in Table 2 and dispersion polymerization was performed in nitrogen atmosphere at 60°C at 80 cycles/minute for 24 hours. The poly(stearyl acrylate) (PSA) particles obtained were centrifuged after polymerization using a methanol medium to remove excess PVP.

**[Table 2]**

| Raw material | Amount used |
|---|---|
| SA | 0.32 g |
| AIBN | 0.01 g |
| PVP | 0.2 g |
| Ethanol | 6 g |

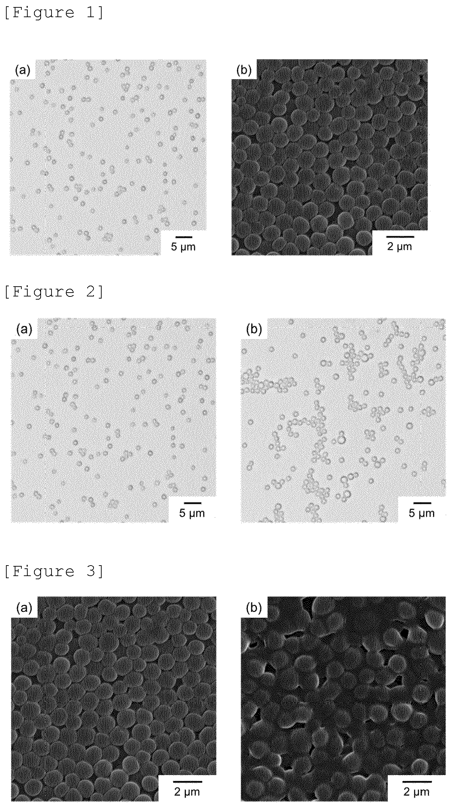

Optical micrographs and scanning electron micrographs (SEM) of the resulting particles are shown. The analysis results using an image analysis software (Win roof made by Mitani Corporation) confirm that relatively monodisperse PSA particles with a number average particle size of 1.27 µm and a fluctuation coefficient (Cv value) of 6.4% were prepared (Figure 1).

### [Preparation of PSA/PEHMA core-shell particle]

Core-shell particles were prepared by seed dispersion polymerization using EHMA of which homopolymer has a lower Tg than SA (of which homopolymer has a Tg of -10°C). A predetermined amount of the PSA particles obtained above, which were the seed, EHMA, AIBN, PVP (K-30), methanol and water were placed in a sealed tube under conditions shown in Table 3, and polymerization was performed in nitrogen atmosphere at 60°C using a shaker at 120 cycles/minute for 24 hours. The poly(stearyl acrylate)/poly(2-ethylhexyl methacrylate) (PSA/PEHMA) particles obtained were centrifuged after polymerization using a methanol medium to remove excess PVP.

**[Table 3]**

| Raw material | Amount used |
|---|---|
| PSA particle | 0.4 g |
| EHMA | 0.2 g |
| AIBN | 0.003 g |
| PVP | 0.02 g |
| Methanol | 6.4 g |
| Water | 1.6 g |

Figure 2 is an optical micrograph of the particles before and after the seed dispersion polymerization. Figure 2(a) is a micrograph of emulsion of the PSA particle before the seed dispersion polymerization; and Figure 2 (b) is a micrograph of emulsion of the PSA/PEHMA particles after the seed dispersion polymerization. An increase in the particle size before and after the polymerization suggests the progress of the polymerization.

Figure 3(a) is a SEM image of PSA particles cast at room temperature and Figure 3(b) is a SEM image of PSA/PEHMA particles cast at room temperature. In the PSA/PEHMA particles, PSA, the core, has a T_{g} of 30°C, and PEHMA, the shell, has a T_{g} of -10°C. Thus, only PEHMA, which was the shell, was observed to be fused at room temperature, suggesting that a core-shell particle was formed.

### [Preparation of emulsion film of PSA/PEHMA particle]

An emulsion of the resulting PSA/PEHMA particles (an ethanol medium) was dropped on a glass slide and dried under conditions of room temperature (about 20°C) and 24 hours to prepare an emulsion film of the PSA/PEHMA particles having a core-shell structure.

The surface of the emulsion film of the PSA/PEHMA particles was observed using the optical micrograph, and as a result the film was found to be highly uniform without cracks on the surface.

### [Measurement of water contact angle of emulsion film of PSA/PEHMA particle]

The water contact angle of the resulting film was measured using a contact angle meter (Dropmaster 6000X made by Kyowa Interface Science Co., Ltd.). The result is that the emulsion film of the PSA/PEHMA particles keeps high water-repellency with a water contact angle of 126.3°.

### <Comparative Example 1: Preparation of emulsion film of PSA particle and PSA smooth film>

### [Preparation of emulsion film of PSA particle and PSA smooth film]

The emulsion of the PSA particles (an ethanol medium) prepared in Example 1 was dropped on a glass slide and dried under conditions of room temperature (about 20°C) and 24 hours to prepare an emulsion film of the PSA particles.

A PSA smooth film for comparison was prepared by dropping an emulsion of particles (an ethanol medium) prepared in the same manner on an aluminum substrate and dried under conditions of room temperature and 24 hours to prepare an emulsion film of the PSA particles, and then melt-pressing the film under conditions of 80°C, 10 MPa and 10 minutes.

The surface of the PSA smooth film and the surface of the emulsion film of the PSA particles were observed by an SEM. The particle shape of PSA was not maintained on the surface of the PSA smooth film, and this suggests that the film has a smooth surface. Many cracks were observed on the surface of the emulsion film of the PSA particles, and this means that the film is not sufficiently uniform. Many cracks were visually observed on the surface of the emulsion film of the PSA particles.

### [Measurement of water contact angle of emulsion film of PSA smooth film and emulsion film of PSA particle]

The water contact angle of the resulting films was measured using a contact angle meter (Dropmaster 6000X made by Kyowa Interface Science Co., Ltd.). The result is that the PSA smooth film has a water contact angle of 102.1° and the emulsion film of the PSA particles has a water contact angle of 118.5°.

### [Measurement of water contact angle of PSA particle after re-dispersion in water]

The emulsion of the PSA particles was an ethanol solution, and thus powder was collected by centrifugation, and then the resultant was attempted to be dispersed in water. However, re-dispersion into water failed due to high water-repellency. Then, sodium lauryl sulfate was added to the polymer as a surfactant at 5% based on the polymer and the polymer was redispersed to give an aqueous emulsion. The water contact angle of a film formed using the emulsion was measured to be 100°, suggesting that the surfactant reduced water repellency.

## Claims

1. A particle, which is an organic fine particle comprising
- a non-fluorine core polymer having a Tg or melting point, each determined by differential scanning calorimetry (DSC), of ≥ 15°C, and a water contact angle, determined by the method defined in the description, of ≥ 100°, wherein all monofunctional monomers constituting the core polymer are hydrophobic monomers a homopolymer of which has a water contact angle of ≥ 100°; and
- a shell polymer having a Tg or melting point lower than the Tg or melting point of the core polymer, and a water contact angle of < 100°, wherein all monofunctional monomers constituting the shell polymer are water-insoluble monomers a homopolymer of which is water-insoluble, the water-insoluble monomer having at least one C₁₋₁₀-hydrocarbyl or C₁-fluoroalkyl group.

2. The particle of claim 1, wherein the core polymer comprises a repeating unit derived from a crosslinkable core monomer having at least two ethylenically unsaturated double bonds, and the shell polymer is free of such a repeating unit.

3. The particle of claim 1 or 2, wherein the core polymer comprises a repeating unit derived from a crosslinkable core monomer having at least two ethylenically unsaturated double bonds, and the shell polymer has a Tg or melting point which is lower than the 10% thermal decomposition temperature, determined by thermogravimetric analysis /TGA) in air at a temperature increase rate of 10°C/minute, of the core polymer.

4. The particle of any of claims 1-3, wherein the hydrophobic core monomer is free of a reactive/hydrophilic monomer having an ethylenically unsaturated double bond and at least one reactive group and/or hydrophilic group.

5. The particle of claim 4, wherein the reactive/hydrophilic monomer is at least one monomer selected from glycidyl (meth)acrylate, glycerol (meth)acrylate, hydroxymethyl (meth)acrylate, hydroxyethyl (meth)acrylate, 3-hydroxypropyl (meth)acrylate, 2-hydroxypropyl (meth)acrylate, 2,3-dihydroxypropyl (meth)acrylate, 3-chloro-2-hydroxypropyl (meth)acrylate, 3-hydroxybutyl (meth)acrylate, 4-hydroxybutyl (meth)acrylate, 2-hydroxybutyl (meth)acrylate, 2-acetoacetoxyethyl (meth)acrylate, 4-hydroxybutyl acrylate glycidyl ether, acrylic acid, methacrylic acid, trimethylsilyl (meth)acrylate, 2-(trimethylsilyloxy)ethyl (meth)acrylate, 2-(dimethylamino)ethyl (meth)acrylate, 2-(tert-butylamino)ethyl (meth)acrylate, a dimethylaminoethyl methacrylate quaternary compound and tetrahydrofurfuryl (meth)acrylate.

6. The particle of any of claims 1-5, wherein the homopolymer of the water-insoluble shell monomer has a solubility in water at 25°C, determined by the method defined in the description, of ≤ 10 g/l.

7. The particle of any of claims 1-6, wherein the hydrophobic core monomer has at least one C₄₋₄₀-hydrocarbyl group.

8. The particle of any of claims 1-7, wherein the hydrophobic core monomer is of the formula (1) or (2):
CH₂=C(-R¹²)-C(=O)-Y¹¹-(R¹¹)*ₖ* (1)
wherein
R¹¹ is aliphatic C_{11- 40}-hydrocarbyl,
R¹² is H, halogen or a monovalent organic group,
Y¹¹ is a di- to tetravalent group composed of at least one selected from a direct bond, a di- to tetravalent C₁-hydrocarbon group, -C₆H₄-, -O-, -C(=O)-, -S(=O)₂- and -NR'-, where R' is H or C₁₋₄-hydrocarbyl, and
*k* is 1-3; or 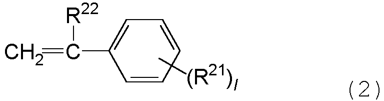
wherein
R²¹ is C₃₋₃₀-hydrocarbyl,
R²² is H, halogen or a monovalent organic group, and
*l* is 1-3.

9. The particle of any of claims 1-8, wherein the water-insoluble shell monomer is of the formula (3) or (4):
CH₂=C(-R³²)-C(=O)-Y³¹-(R³¹)*ₘ* (3)
wherein
R³¹ is aliphatic C₁₋₁₀-hydrocarbyl or - (CH₂) ᵢR³³, wherein R³³ is C₁-fluoroalkyl and i is 1-6,
R³² is H, halogen or a monovalent organic group,
Y³¹ is a di- to tetravalent group composed of at least one selected from a direct bond, a di- to tetravalent C₁-hydrocarbon group, -C₆H₄-, -O-, -C(=O)-, -S(=O)₂- and -NR'-, where R' is H or C₁₋₄-hydrocarbyl, and
*m* is 1-3; or 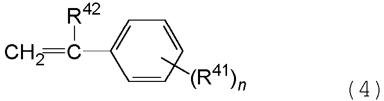
wherein
R⁴¹ is C₁₋₂-hydrocarbyl,
R⁴² is H, halogen or a monovalent organic group, and
*n* is 0-3.

10. The particle of any of claims 1-9, wherein the repeating unit derived from the hydrophobic core monomer is ≥ 70 molar parts based on 100 molar parts in total of the repeating units in the core polymer, and the repeating unit derived from the water-insoluble shell monomer is ≥ 70 molar parts based on 100 molar parts in total of the repeating units in the shell polymer.

11. The particle of any of claims 1-10, which has an average particle size, measured by image analysis, of 10-5,000 nm.

12. A surface coating structure, comprising the organic fine particle of any of claims 1-11 arranged on a surface of a substrate.

13. A water-repellent composition which is a dispersion of an organic fine particle, and comprises the particle of any of claims 1-11; and a liquid medium.

14. A method for forming a surface coating structure, comprising applying a treatment liquid comprising the water-repellent composition of claim 13 to a substrate.

## Patentansprüche

1. Teilchen, das ein organisches Feinteilchen ist, umfassend
- ein Nicht-Fluor-Kernpolymer mit einer Tg oder einem Schmelzpunkt, jeweils bestimmt durch Differential-Scanning-Kalorimetrie (DSC), von ≥ 15°C und einem Wasserkontaktwinkel, bestimmt durch das in der Beschreibung definierte Verfahren, von ≥ 100°, wobei alle monofunktionellen Monomere, die das Kernpolymer bilden, hydrophobe Monomere sind, von denen ein Homopolymer einen Wasserkontaktwinkel von ≥ 100° aufweist; und
- ein Hüllenpolymer mit einer Tg oder einem Schmelzpunkt, der niedriger ist als die Tg oder der Schmelzpunkt des Kernpolymers, und einem Wasserkontaktwinkel von < 100°, wobei alle monofunktionellen Monomere, die das Hüllenpolymer bilden, wasserunlösliche Monomere sind, von denen ein Homopolymer wasserunlöslich ist, wobei das wasserunlösliche Monomer mindestens eine C₁₋₁₀-Kohlenwasserstoff- oder C₁-Fluoralkylgruppe aufweist.

2. Teilchen nach Anspruch 1, wobei das Kernpolymer eine Wiederholungseinheit umfasst, die von einem vernetzbaren Kernmonomer mit mindestens zwei ethylenisch ungesättigten Doppelbindungen abgeleitet ist, und das Hüllenpolymer frei von einer solchen Wiederholungseinheit ist.

3. Teilchen nach Anspruch 1 oder 2, wobei das Kernpolymer eine Wiederholungseinheit umfasst, die von einem vernetzbaren Kernmonomer mit mindestens zwei ethylenisch ungesättigten Doppelbindungen abgeleitet ist, und das Hüllenpolymer eine Tg oder Schmelzpunkt aufweist, der niedriger ist als die 10%ige thermische Zersetzungstemperatur des Kernpolymers, bestimmt durch thermogravimetrische Analyse (TGA) in Luft bei einer Temperaturanstiegsrate von 10°C/Minute.

4. Teilchen nach mindestens einem der Ansprüche 1-3, wobei das hydrophobe Kernmonomer frei von einem reaktiven/hydrophilen Monomer mit einer ethylenisch ungesättigten Doppelbindung und mindestens einer reaktiven Gruppe und/oder hydrophilen Gruppe ist.

5. Teilchen nach Anspruch 4, wobei das reaktive/hydrophile Monomer mindestens ein Monomer ist, ausgewählt aus Glycidyl(meth)acrylat, Glycerin(meth)acrylat, Hydroxymethyl(meth)acrylat, Hydroxyethyl(meth)acrylat, 3-Hydroxypropyl(meth)acrylat, 2-Hydroxypropyl(meth)acrylat, 2,3-Dihydroxypropyl(meth)acrylat, 3-Chlor-2-hydroxypropyl(meth)acrylat, 3-Hydroxybutyl(meth)acrylat, 4-Hydroxybutyl(meth)acrylat, 2-Hydroxybutyl(meth)acrylat, 2-Acetoacetoxyethyl(meth)acrylat, 4-Hydroxybutylacrylat-Glycidylether, Acrylsäure, Methacrylsäure, Trimethylsilyl(meth)acrylat, 2-(Trimethylsilyloxy)ethyl(meth)acrylat, 2-(Dimethylamino)ethyl(meth)acrylat, 2-(tert-Butylamino)ethyl(meth)acrylat, einer quaternären Dimethylaminoethylmethacrylatverbindung und Tetrahydrofurfuryl(meth)acrylat.

6. Teilchen nach mindestens einem der Ansprüche 1-5, wobei das Homopolymer des wasserunlöslichen Hüllenmonomers eine Löslichkeit in Wasser bei 25°C, bestimmt nach dem in der Beschreibung definierten Verfahren, von ≤ 10 g/l aufweist.

7. Teilchen nach mindestens einem der Ansprüche 1-6, wobei das hydrophobe Kernmonomer mindestens eine C₄₋₄₀-Kohlenwasserstoffgruppe aufweist.

8. Teilchen nach mindestens einem der Ansprüche 1-7, wobei das hydrophobe Kernmonomer die Formel (1) oder (2) aufweist:
CH₂=C(-R¹²)-C(=O)-Y¹¹-(R¹¹)*ₖ* (1)
worin
R¹¹ ein aliphatischer C₁₁₋₄₀-Kohlenwasserstoffrest ist,
R¹² H, Halogen oder eine einwertige organische Gruppe ist,
Y¹¹ eine zwei- bis vierwertige Gruppe ist, die aus mindestens einer Gruppe aufgebaut ist, ausgewählt aus einer direkten Bindung, einer zwei- bis vierwertigen C₁-Kohlenwasserstoffgruppe, -C₆H₄-, -O-, -C(=O)-, -S(=O)₂- und - NR'-, worin R' H oder C₁₋₄-Kohlenwasserstoff ist, und
*k* 1-3 ist; oder 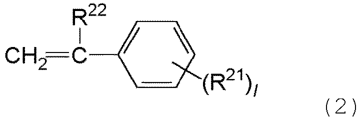 worin
R²¹ ein C₃₋₃₀-Kohlenwasserstoffrest ist,
R²² H, Halogen oder eine einwertige organische Gruppe ist, und
*l* 1-3 ist.

9. Teilchen nach mindestens einem der Ansprüche 1-8, wobei das wasserunlösliche Hüllenmonomer die Formel (3) oder (4) aufweist:
CH₂=C(-R³²)-C(=O)-Y³¹-(R³¹)*ₘ* (3)
worin
R³¹ ein aliphatischer C₁₋₁₀-Kohlenwasserstoffrest oder -(CH₂)ᵢR³³ ist, worin R³³ ein C₁-Fluoralkylrest ist und i 1-6 ist,
R³² H, Halogen oder eine einwertige organische Gruppe ist,
Y³¹ eine zwei- bis vierwertige Gruppe ist, die aus mindestens einer Gruppe aufgebaut ist, ausgewählt aus einer direkten Bindung, einer zwei- bis vierwertigen C₁-Kohlenwasserstoffgruppe, -C₆H₄-, -O-, -C(=O)-, -S(=O)₂- und -NR'-, worin R' H oder C₁₋₄-Kohlenwasserstoff ist, und
*m* 1-3 ist; oder 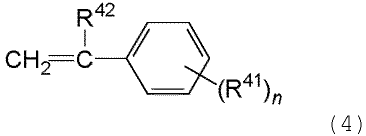 worin
R⁴¹ ein C₁₋₂-Kohlenwasserstoffrest ist,
R⁴² H, Halogen oder eine einwertige organische Gruppe ist, und
*n* 0-3 ist.

10. Teilchen nach mindestens einem der Ansprüche 1-9, wobei die von dem hydrophoben Kernmonomer abgeleitete Wiederholungseinheit ≥ 70 Molteile, bezogen auf 100 Molteile der gesamten Wiederholungseinheiten im Kernpolymer, und die von dem wasserunlöslichen Hüllenmonomer abgeleitete Wiederholungseinheit ≥ 70 Molteile, bezogen auf 100 Molteile der gesamten Wiederholungseinheiten im Hüllenpolymer, beträgt.

11. Teilchen nach mindestens einem der Ansprüche 1-10, das eine durchschnittliche Teilchengröße, gemessen durch Bildanalyse, von 10-5.000 nm aufweist.

12. Oberflächenbeschichtungsstruktur, umfassend das organische Feinteilchen nach mindestens einem der Ansprüche 1-11, das auf einer Oberfläche eines Substrats angeordnet ist.

13. Wasserabweisende Zusammensetzung, die eine Dispersion eines organischen Feinteilchens ist und das Teilchen nach mindestens einem der Ansprüche 1 bis 11 und ein flüssiges Medium umfasst.

14. Verfahren zur Bildung einer Oberflächenbeschichtungsstruktur, umfassend das Aufbringen einer Behandlungsflüssigkeit, die die wasserabweisende Zusammensetzung nach Anspruch 13 umfasst, auf ein Substrat.

## Revendications

1. Particule, qui est une particule fine organique comprenant
- un polymère à noyau non fluoré ayant un Tg ou un point de fusion, chacun déterminé par analyse calorimétrique à compensation de puissance (DSC), qui est ≥ 15°C, et un angle de contact avec l'eau, déterminé par la méthode définie dans la description, qui est ≥ 100°, dans laquelle tous les monomères monofonctionnels constituant le polymère à noyau sont des monomères hydrophobes, dont un homopolymère a un angle de contact avec l'eau ≥ 100° ; et
- un polymère à enveloppe ayant un Tg ou un point de fusion inférieur au Tg ou point de fusion du polymère à noyau, et un angle de contact avec l'eau qui est < 100°, dans laquelle tous les monomères monofonctionnels constituant le polymère à enveloppe sont des monomères insolubles dans l'eau, duquel un homopolymère est insoluble dans l'eau, le monomère insoluble dans l'eau ayant au moins un groupe hydrocarbyle en C₁₋₁₀ ou un groupe fluoroalkyle en C₁.

2. Particule selon la revendication 1, dans laquelle le polymère à noyau comprend un motif de répétition dérivé d'un monomère à noyau réticulable ayant au moins deux doubles liaisons éthyléniquement insaturées, et le polymère à enveloppe est exempt d'un tel motif de répétition.

3. Particule selon la revendication 1 ou la revendication 2, dans laquelle le polymère à noyau comprend un motif de répétition dérivé d'un monomère à noyau réticulable ayant au moins deux doubles liaisons éthyléniquement insaturées, et le polymère à enveloppe a un Tg ou point de fusion qui est inférieur à 10 % de la température de décomposition thermique, déterminée par analyse thermogravimétrique (TGA) dans l'air à une vitesse d'augmentation de température de 10°C/minute, du polymère à noyau.

4. Particule selon l'une quelconque des revendications 1 à 3, dans laquelle le monomère à noyau hydrophobe est exempt d'un monomère réactif/hydrophile ayant une double liaison éthyléniquement insaturée et au moins un groupe réactif et/ou un groupe hydrophile.

5. Particule selon la revendication 4, dans laquelle le monomère réactif/hydrophile est au moins un monomère choisi parmi le (méth)acrylate de glycidyle, le (méth)acrylate de glycérol, le (méth)acrylate d'hydroxyméthyle, le (méth)acrylate d'hydroxyéthyle, le (méth)acrylate de 3-hydroxypropyle, le (méth)acrylate de 2-hydroxypropyle, le (méth)acrylate de 2,3-dihydroxypropyle, le (méth)acrylate de 3-chloro-2-hydroxypropyle, le (méth)acrylate de 3-hydroxybutyle, le (méth)acrylate de 4-hydroxybutyle, le (méth)acrylate de 2-hydroxybutyle, le (méth)acrylate de 2-acétoacétoxyéthyle, l'éther glycidylique d'acrylate de 4-hydroxybutyle, l'acide acrylique, l'acide méthacrylique, le (méth)acrylate de triméthylsilyle, le (méth)acrylate de 2-(triméthylsilyloxy)éthyle, le (méth)acrylate de 2-(diméthylamino)éthyle, le (méth)acrylate de 2-(tert-butylamino)éthyle, un composé quaternaire de méthacrylate de diméthylaminoéthyle et le (méth)acrylate de tétrahydrofurfuryle.

6. Particule selon l'une quelconque des revendications 1 à 5, dans laquelle l'homopolymère du monomère à enveloppe insoluble dans l'eau a une solubilité dans l'eau à 25°C, déterminée par la méthode définie dans la description, qui est ≤ 10 g/l.

7. Particule selon l'une quelconque des revendications 1 à 6, dans laquelle le monomère à noyau hydrophobe a au moins un groupe hydrocarbyle en C₄-₄₀.

8. Particule selon l'une quelconque des revendications 1 à 7, dans laquelle le monomère à noyau hydrophobe est selon la formule (1) ou (2) :
CH₂=C(-R¹²)-C(=O)-Y¹¹-(R¹¹)*ₖ* (1)
dans laquelle
R¹¹ est un hydrocarbyle aliphatique en C₁₁₋₄₀,
R¹² est H, un halogène ou un groupe organique monovalent,
Y¹¹ est un groupe divalent à tétravalent composé d'au moins un élément choisi parmi une liaison directe, un groupe hydrocarboné en C₁ divalent à tétravalent, -C₆H₄-, -O-, -C(=O)-, -S(=O)₂- et -NR'-, où R' est H ou hydrocarbyle en C₁₋₄, et
*k* est de 1 à 3 ; ou 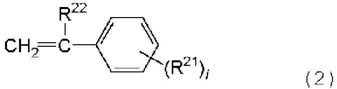
dans laquelle
R²¹ est un hydrocarbyle en C₃₋₃₀,
R²² est H, un halogène ou un groupe organique monovalent, et
I est de 1 à 3.

9. Particule selon l'une quelconque des revendications 1 à 8, dans laquelle le monomère à noyau insoluble dans l'eau est selon la formule (3) ou (4) :
CH₂=C(-R³²)-C(=O)-Y³¹-(R³¹)ₘ (3)
dans laquelle
R³¹ est un hydrocarbyle aliphatique en C₁₋₁₀ ou en -(CH₂)ᵢR³³, dans laquelle R³³ est un fluoroalkyle en C₁ et i est de 1 à 6,
R³² est H, un halogène ou un groupe organique monovalent,
Y³¹ est un groupe divalent à tétravalent composé d'au moins un élément choisi parmi une liaison directe, un groupe hydrocarboné en C₁ divalent à tétravalent, -C₆H₄-, -O-, -C(=O)-, -S(=O)₂- et -NR'-, où R' est H ou un hydrocarbyle en C₁-₄, et
*m* est de 1 à 3 ; ou 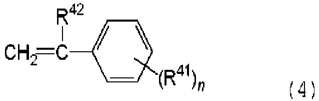
dans laquelle
R⁴¹ est un hydrocarbyle en C₁-₂,
R⁴² est H, un halogène ou un groupe organique monovalent, et
n est de 0 à 3.

10. Particule selon l'une quelconque des revendications 1 à 9, dans laquelle le motif de répétition dérivé du monomère à noyau hydrophobe est ≥ 70 parties en moles sur la base de 100 parties en moles dans le total des motifs de répétition dans le polymère à noyau, et le motif de répétition dérivé du monomère à enveloppe insoluble dans l'eau est ≥ 70 parties en moles sur la base de 100 parties en moles dans le total des motifs de répétition dans le polymère à enveloppe.

11. Particule selon l'une quelconque des revendications 1 à 10, qui a une taille de particule moyenne, mesurée par analyse d'image, de 10 à 5000 nm.

12. Structure de revêtement de surface, comprenant la particule fine organique selon l'une quelconque des revendications 1 à 11 agencée sur une surface d'un substrat.

13. Composition hydrofuge qui est une dispersion d'une particule fine organique, et comprend la particule selon l'une quelconque des revendications 1 à 11 ; et un milieu liquide.

14. Procédé destiné à former une structure de revêtement de surface, comprenant le fait d'appliquer un liquide de traitement comprenant la composition hydrofuge selon la revendication 13 sur un substrat.
